**Europäisches Patentamt**

**European Patent Office**

**Office européen des brevets**

(19)

(11) Numéro de publication: **0 322 329 B1**

(12) **FASCICULE DE BREVET EUROPEEN**

(45) Date de publication de fascicule du brevet: **02.12.92**　(51) Int. Cl.⁵: **B66F 7/02**

(21) Numéro de dépôt: **88440110.0**

(22) Date de dépôt: **23.12.88**

(54) **Ecrou de translation à utiliser dans un ensemble de levage.**

(30) Priorité: **23.12.87 FR 8718256**

(43) Date de publication de la demande:
**28.06.89 Bulletin 89/26**

(45) Mention de la délivrance du brevet:
**02.12.92 Bulletin 92/49**

(84) Etats contractants désignés:
**AT BE CH DE ES GB GR IT LI LU NL SE**

(56) Documents cités:
**CH-A- 526 463**
**FR-A- 2 377 964**
**US-A- 2 743 623**
**US-A- 3 221 118**

(73) Titulaire: **LOHR INDUSTRIE**
**29, rue du 14 Juillet**
**F-67980 Hangenbieten(FR)**

(72) Inventeur: **André, Jean-Luc**
**15, route du Vin**
**F-67310 Dangolsheim(FR)**

(74) Mandataire: **Metz, Paul**
**CABINET METZ PATNI 63, rue de la Ganzau**
**B.P. 63**
**F-67024 Strasbourg(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention se rapporte à un écrou de translation débrayable à utiliser dans un ensemble de levage notamment dans un ensemble de levage comprenant un ou plusieurs plateaux porteurs et/ou plans de chargement tels que ceux d'un véhicule porte-voitures.

Bien entendu, d'autres applications s'avèrent possibles dans des domaines analogues ou voisins tels que les domaines du chargement, de la manutention, du levage de charges ou de personnes.

Pour lever ou amener à niveau des plans ou plateaux porteurs, ou déplacer un plateau ou plusieurs plateaux porteurs parallèlement à un plan de chargement horizontal ou les incliner par rapport à un plan de chargement horizontal, on utilise classiquement pour chaque plateau quatre mécanismes à vis sensiblement verticales et à écrous reliés au plateau porteur, monté chacun en prise sur une vis. Chaque vis est renfermée dans un montant appelé poteau.

La rotation simultanée des vis d'un même couple de vis soutenant un même plateau entraîne le déplacement vertical du plateau porteur le long des poteaux.

Dans le cas de plusieurs plateaux constituant habituellement l'équipement porteur d'un véhicule ou d'un convoi porte-voitures, il s'avère indispensable de garder une indépendance totale de mouvements entre les plateaux porteurs.

Cette indépendance résulte de la nécessité d'effectuer individuellement et successivement le chargement puis le levage et éventuellement inclinaison de chaque plateau porteur.

Classiquement, on ne peut obtenir jusqu'à présent l'indépendance totale des mouvements de deux plateaux que par deux mécanismes de levage séparés ou constitués au niveau de chaque poteau par deux vis parallèles indépendantes propres à chaque plateau porteur, actionnées individuellement et séparément par deux commandes distinctes.

Dans le cas de trois plateaux porteurs, trois mécanismes entiers séparés, vis et écrous, et leur commande individuelle s'avèrent nécessaires dans un même poteau.

La présente invention a pour but de remédier à cet inconvénient en permettant, avec une seule vis par poteau, la commande totalement indépendante de deux ou trois plateaux porteurs ou plus.

A cet effet, l'invention se rapporte à un écrou de translation à utiliser dans un ensemble unitaire de levage notamment pour plateau porteur ou plan de chargement caractérisé en ce qu'il comprend un bloc coulissant relié ou articulé au plateau porteur, une douille filetée prisonnière dans ce bloc coulissant montée sur une vis, un appui de rotation par l'intermédiaire duquel le bloc coulissant porte sur l'extrémité supérieure de la douille filetée, une liaison d'accouplement et de désaccouplement mécanique entre la douille filetée et une pièce intermédiaire coaxiale susceptible de mouvements axiaux d'accouplement et de désaccouplement le long de la douille vers et au-delà de l'appui de rotation sous l'effet de moyens d'accouplement et désaccouplement pour laisser tourner libre ou bloquer la rotation de la douille filetée sur elle-même en vue de déplacer le bloc coulissant le long de la vis ou de rendre la vis sans effet de translation en laissant la douille filetée tourner libre sur l'appui de rotation par son entraînement en rotation par la vis sur laquelle elle est montée en fonction de l'état d'accouplement ou de désaccouplement de la douille filetée et de la pièce intermédiaire apporté par les moyens d'accouplement et de désaccouplement commandés sélectivement.

De nombreux avantages découlent de la présente invention dont on citera ci-après les principaux :

.   présence d'une seule vis par poteau pour le levage indépendant de plusieurs plateaux porteurs. On peut donc supprimer au moins une vis par poteau;

.   intégration parfaite dans l'ensemble mécanique de levage ;

.   simplicité de construction;

.   entraînement mécanique unique pour une seule vis ;

.   securité positive : le défaut ou la défaillance de commande provoque le blocage en translation

.   à l'état débrayé, le plateau reste à sa position sans autre moyen de blocage en jouant le rôle de verrou : on maintient la charge même à l'arrêt;

.   une sécurité supplémentaire est obtenue par un écrou simple de maintien au repos faisant office de témoin d'usure.

Les caractéristiques techniques et d'autres avantages apparaîtront à la lecture de la description qui suit effectuée à titre d'exemple non limitatif sur les modes de réalisation préférés donnés à titre d'exemples non limitatifs en référence aux dessins accompagnants dans lesquels :

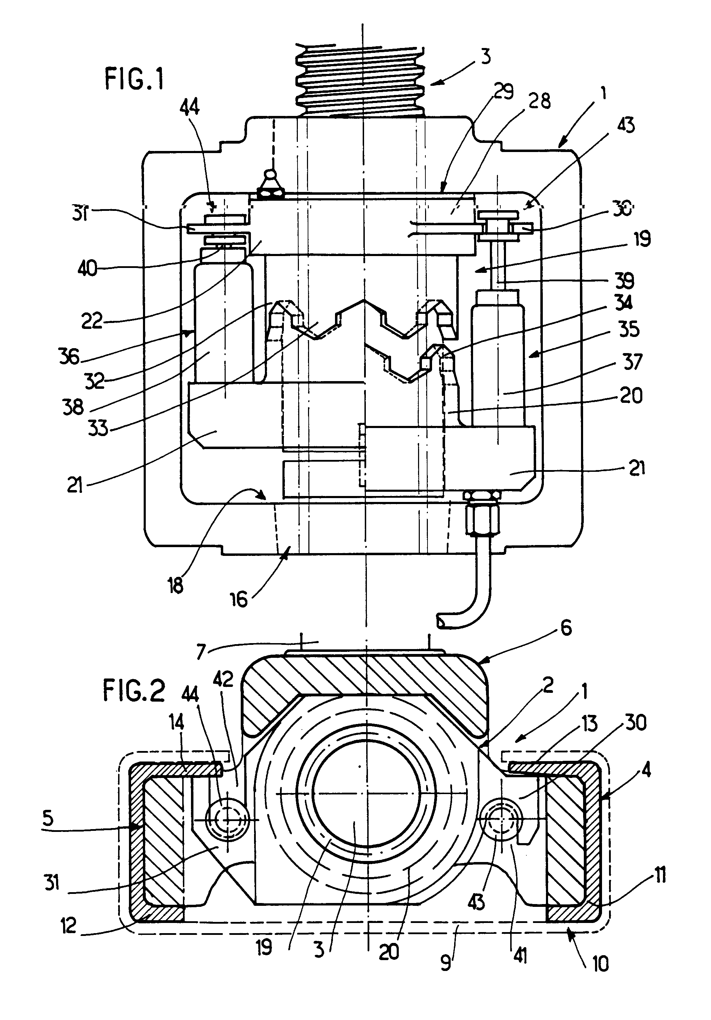

.   la figure 1 est une vue schématique en perspective de l'écrou selon l'invention avec manoeuvre par vérins montrant en demi-partie de droite l'écrou désaccouplé et en demi-partie de gauche les parties constituantes accouplées ;

.   la figure 2 est une vue en coupe transversale horizontale selon la ligne II - II de la figure 1 avec figuration en coupe du profilé de guidage constituant le poteau ;

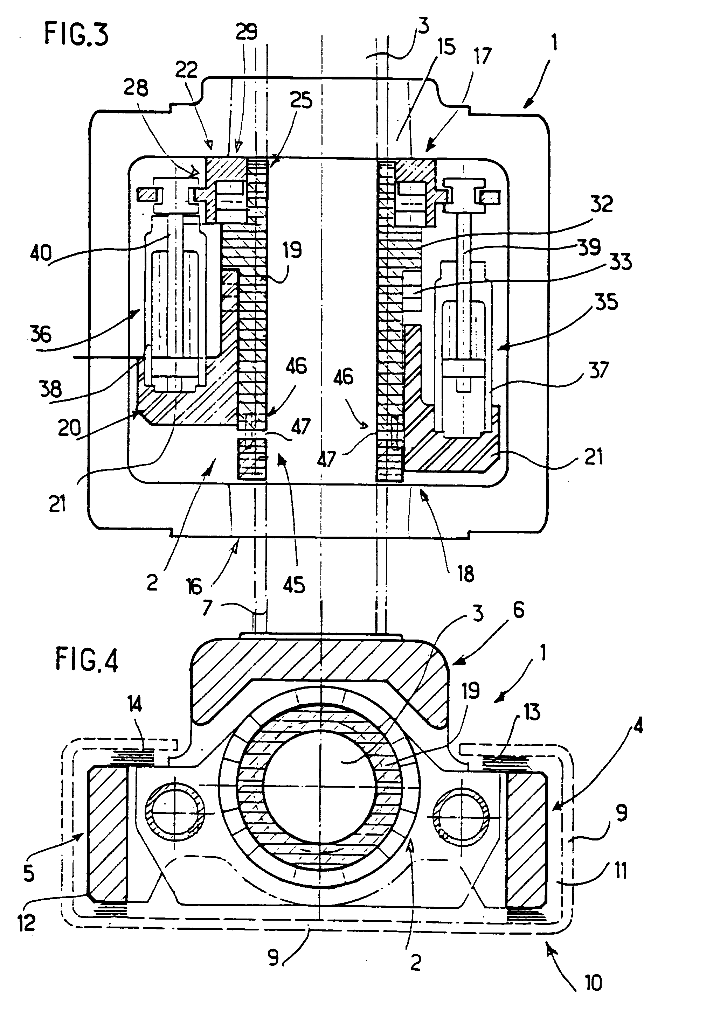

.   la figure 3 est une vue en coupe longitudinale verticale médiane, montrant en demi-partie de droite l'écrou désaccouplé et en demi-partie de gauche les parties constituantes accouplées ;

. la figure 4 est une vue en coupe transversale horizontale au niveau des conformations d'accouplement selon la ligne IV - IV de la figure 1 avec figuration en coupe du profilé de guidage constituant le poteau ;

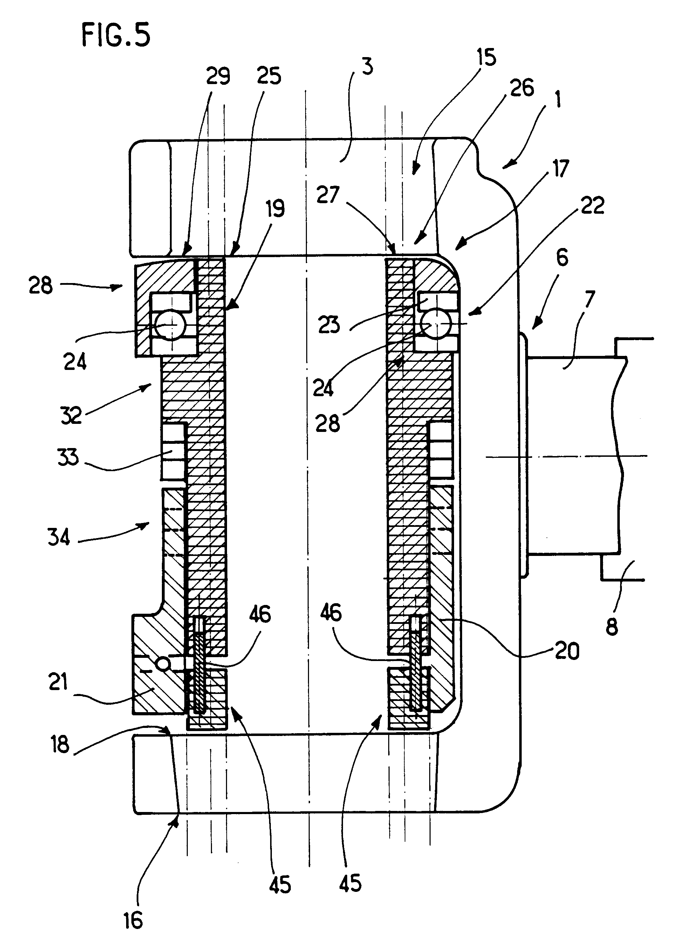

. la figure 5 est une vue en coupe longitudinale verticale médiane dans le plan des vérins de commande ;

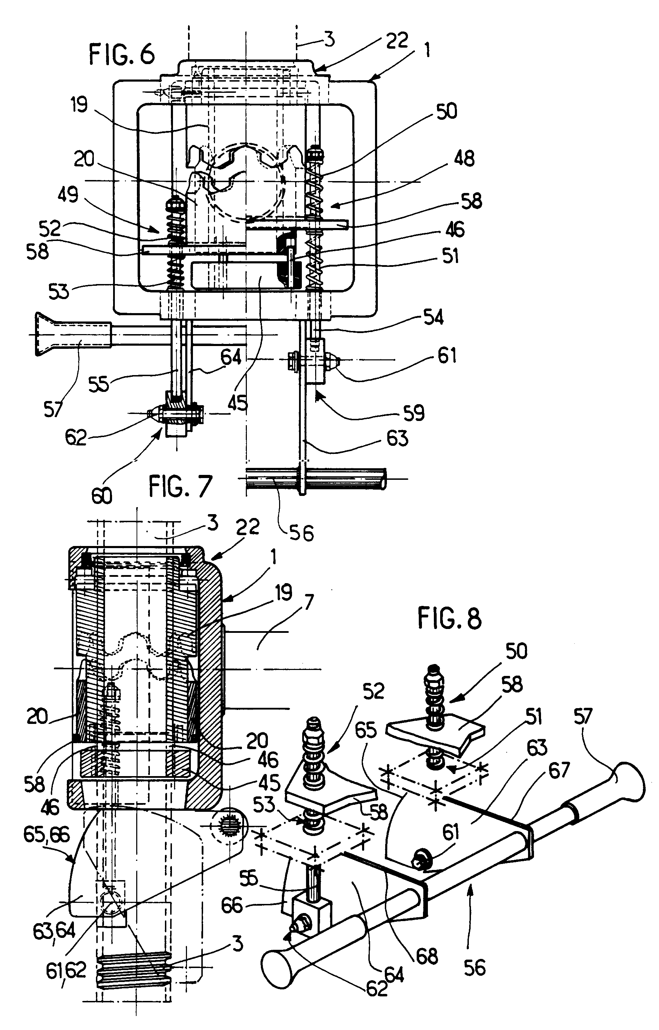

. la figure 7 est une vue mixte en coupe transversale et de profil d'une variante à commande manuelle ;

. la figure 6 est une vue en élévation de la même variante à commande manuelle, un côté abaissé et l'autre côté relevé ;

. la figure 8 est une vue schématique simplifiée en pesrpective du mécanisme de commande manuelle conforme aux figures 6 et 7 ;

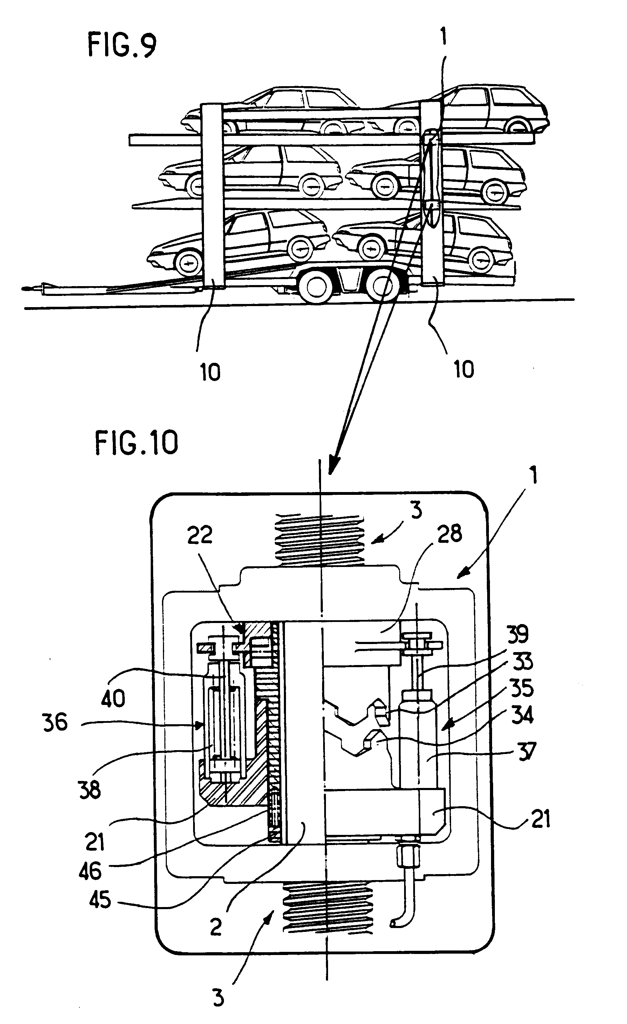

. la figure 9 est une vue schématique d'implantation sur un véhicule porte-voitures à deux plateaux porteurs mobiles avec écorché sur un des poteaux ;

. la figure 10 est une vue agrandie en élévation d'un écrou tel que figurant en écorché sur la figure 9

On décrira ci-après l'invention à l'aide de plusieurs variantes d'exécution dont un exemple de variante à commande manuelle. Il est bien entendu qu'elle ne saurait se limiter aux seuls moyens particuliers décrits.

La présente invention procède de l'idée générale inventive qui consiste à réaliser un écrou en deux parties, écrou scindable sous l'effet de moyens de commande mécaniques, pneumatiques, hydrauliques ou électriques, d'accouplement et de désaccouplement actionnés à partir d'une commande unique extérieure. Une partie est montée sur la vis et tourne librement à l'état désaccouplé. L'autre partie est solidaire d'un bloc coulissant portant avec ses homologues le plateau porteur. Le bloc coulissant est porté par l'écrou proprement dit, par l'intermédiaire d'un appui mécanique de translation libre en rotation.

On examinera ci-après plus précisément les moyens particuliers utilisés pour réaliser les différentes fonctions réunies dans l'écrou de translation débrayable selon l'invention.

L'écrou de translation selon l'invention se compose d'un bloc coulissant 1 renfermant l'écrou proprement dit 2 monté sur une vis ou tige filetée 3 unique pour un poteau de soutien tels que ceux existant par exemple sur un véhicule porte-voitures. Le bloc coulissant 1 présente une forme générale en étrier à chants 4 et 5 dont la saillie latérale 6 est prolongée par un bras articulé 7 relié à un plateau porteur 8.

Le bloc 1 coulisse le long d'un profilé 9, par exemple de section en C constituant un poteau 10.

Le guidage et le glissement du bloc coulissant 1 le long de chaque poteau 10 sont améliorés par des patins 11 et 12 de section en U habillant ses chants 4 et 5.

Afin de réaliser une butée de rotation pour la douille les patins 11 et 12 présentent chacun sur au moins une de leurs faces latérales un retour 13 et 14 disposé, lorsque le patin est en place, sur la même face de l'étrier.

Bien entendu, tout autre moyen équivalent convient.

Par ailleurs, une même vis peut porter, à des niveaux différents, plusieurs écrous de translation débrayables conformes à l'invention dans le cas de plusieurs plateaux porteurs.

Comme indiqué, l'invention permet avec une seule vis par poteau de supporter simultanément plusieurs plateaux tout en commandant leur déplacement séparément.

Le bloc coulissant 1 renfermant l'écrou proprement dit 2 se trouve traversé par la vis 3 sur chacune de ses faces, supérieure et inférieure, par des ouvertures 15 et 16 présentant en sous-face des épaulements respectivement 17 et 18 permettant de maintenir l'écrou 2 proprement dit prisonnier dans le bloc 1.

L'écrou 2 proprement dit se compose d'une douille filetée 19 montée sur la vis et d'une pièce intermédiaire 20 coaxiale à la vis, emmanchée sur la douille 19, susceptible de mouvements de translation axiaux entre une position basse et une position haute sous l'effet de moyens actifs actionnés par une commande extérieure. La pièce intermédiaire 20 présente en partie inférieure une embase 21 en saillie périphérique.

Le bloc coulissant 1 est monté en appui mécanique par la charge sur l'extrémité de la douille filetée 19 par une pièce d'appui mécanique libre en rotation, par exemple une butée à billes 22, palier, roulement ou autre, représentée plus particulièrement sur les figures 3 et 5.

Cette butée à billes se compose classiquement d'une couronne 23 à billes telles que 24, emmanchée sur l'extrémité supérieure de la douille 19 conformée en col 25 à extrémité 26 et à épaulement 27 qui lui sert de siège.

Cette couronne est maintenue en place par une pièce de fermeture 28 conformée par exemple en cage de roulement dont la face supérieure 29 sert de surface d'appui au bloc coulissant et présente des prolongations latérales 30 et 31 en forme d'oreilles (figure 1).

La pièce de fermeture 28 est immobilisée en rotation dans un sens et dans l'autre par butée de l'une ou l'autre oreille sur l'un ou l'autre retour 13 ou 14 des patins 11 ou 12.

Par cette structure, la douille filetée est montée en rotation par rapport au bloc coulissant. Les mouvements de rotation de la vis n'engendrent pas de déplacement longitudinal de la douille car celle-ci, lorsque non freinée ou non bloquée, tourne librement sur elle-même.

Comme on le verra ci-après, un des aspects originaux de l'invention consiste, par des moyens appropriés, à réaliser la liaison mécanique sélective entre la douille filetée 19 et la pièce intermédiaire coaxiale 20.

Selon un mode de réalisation décrit ci-après, la liaison mécanique et la libération sont réalisées par les moyens généraux suivants comprenant des structures d'accouplement en rapprochement ou en éloignement commandés.

La douille filetée 19 présente une couronne d'accouplement 32 conformée en partie inférieure selon une denture 33 de profil adapté à un engagement mécanique.

De même, la pièce intermédiaire coulissante 20 présente une extrémité supérieure en denture 34 de profil homologue.

L'accouplement mécanique est réalisé par le rapprochement et l'interpénétration des dentures en regard sous l'effet de moyens d'accouplement et de désaccouplement montés entre la pièce intermédiaire et une pièce fixe, par exemple la pièce de fermeture 28 de la butée à billes.

Selon le mode choisi à titre d'exemple, les moyens d'accouplement et de désaccouplement sont, par exemple, deux vérins pneumatiques ou hydrauliques 35 et 36 à corps 37 et 38 solidaires de l'embase 21 de la pièce intermédiaire et à tiges 39 et 40 articulées ou montées sur la pièce de fermeture de la butée à billes, par exemple dans des lumières 41 et 42 à l'aide de pions 43 et 44.

Le rappel élastique est dirigé vers le haut ce qui permet d'obtenir une liaison accouplée, c'est-à-dire un blocage lorsque la commande des vérins n'est pas activée.

Bien entendu, les moyens d'accouplement et de désaccouplement peuvent être remplacés par des équivalents, par exemple des dispositifs électromécaniques ou électromagnétiques assurant la même fonction.

Leur rôle consiste à rapprocher et à éloigner les structures d'accouplement en vue d'établir ou de rompre la liaison mécanique entre la pièce intermédiaire et la douille filetée.

La douille filetée 19 présente à son extrémité inférieure, à l'intérieur du bloc coulissant 1, un écrou de sécurité 45 monté axialement flottant sur la vis par une liaison mécanique de rotation laissant une liberté de translation longitudinale. Pour ce faire, l'écrou de sécurité 45 est par exemple relié à la douille filetée 19 par plusieurs goupilles axiales telles que 46 disposées axialement à la vis sur une circonférence correspondant à un cercle intérieur à la matière par exemple médian. L'écrou est monté flottant à un intervalle 47 de l'extrémité basse de la douille filetée 19.

Les goupilles n'assurent qu'une liaison mécanique dissociable pour garder au montage mécanique son caractère flottant. Elles sont donc montées avec un certain jeu.

Cet écrou de sécurité remplit simultanément trois fonctions. Il assure tout d'abord une sécurité supplémentaire car constituant un deuxième écrou capable de porter la charge en cas de rupture de la douille filetée. Il participe ensuite au guidage terminal bas de la pièce intermédiaire. Il sert finalement de témoin d'usure du pas de vis de la douille filetée.

En effet, l'usure du filetage de la douille filetée 19 se traduit par un plus petit intervalle 47 entre l'écrou et l'extrémité inférieure de la douille.

Pour être complet, on décrira ci-après une variante à commande manuelle en référence aux figures 6, 7 et 8.

Selon cette variante, les vérins à ressorts de rappel sont remplacés chacun par au moins deux moyens de contrainte élastique 48 et 49, par exemple des ressorts 50, 51 et 52, 53 montés par couple, en opposition sur les tiges coulissantes 54 et 55 actionnées par une barre de manoeuvre 56 terminée par des poignées telles que 57.

Les ressorts sont montés de part et d'autre en compression contre une fourche 58 faisant office d'embase-support pour le soutien en déplacement axial de l'embase portant la pièce intermédiaire 20.

Les extrémités inférieures 59 et 60 des tiges 54 et 55 sont montées articulées par exemple par des axes transversaux 61 et 62 sur des platines parallèles jouant le rôle de cames 63 et 64 jumelées en extrémité par la barre de manoeuvre 56.

Les cames présentent chacune une partie transversale 65 et 66 incurvée constituant le profil de came suivie en partie supérieure par un chant plat 67 ou 68 qui porte sur la sous-face du bloc coulissant 1 servant d'appui.

La pièce intermédiaire 20 occupera, selon la position de la barre de manoeuvre 56, haute ou basse, une position basse dans laquelle l'écrou est débrayé ou une position haute dans laquelle les dentures 33 et 34 se faisant face sont en prise.

On retrouve en partie supérieure l'appui mécanique de translation à libre rotation, par exemple une butée à billes 22.

On note également ici l'écrou de sécurité 45 et les goupilles axiales 46 permettant l'indication de degré d'usure.

On a constitué ainsi un moyen mécanique de manoeuvre équivalent à celui précédemment décrit, utilisant des vérins à ressort de rappel.

On expliquera maintenant le fonctionnement de l'écrou débrayable selon l'invention.

En position de déverrouillage, la douille filetée 19 supporte le bloc coulissant 1 par l'intermédiaire de la butée à billes 22. Les vérins à rappel élastique 35 et 36 sont commandés en pression. Ils sont ainsi sortis, c'est-à-dire maintenus à leur niveau bas par pression du fluide de commande. Dans cette position, la pièce intermédiaire avec son embase portant les vérins est en position basse, position dans laquelle les structures d'accouplement, dentures inférieure et supérieure, sont dissociées.

Toute rotation de la vis entraîne une rotation de la douille filetée sur elle-même qui se trouve donc inopérante pour la translation du bloc coulissant en raison de la dissociation mécanique des pièces constituantes. L'écrou ne se déplace pas longitudinalement le long de la vis, laissant le plateau immobile en translation. Celui-ci conserve la position qu'occupait au moment du déverrouillage.

Cet état de blocage reste constant, constituant à lui seul une sécurité positive.

Lorsque les vérins sont libérés, les tiges rentrent dans les corps de vérin sous l'action du ressort de rappel, soulevant ainsi l'embase pour faire coulisser la pièce intermédiaire le long de la paroi lisse extérieure de la douille filetée.

Les dentures arrivent en prise et l'accouplement se produit immédiatement si les dents sont en correspondance ou, dans le cas contraire, après les premières fractions de tours de rotation de la douille filetée.

Après accouplement, la rotation de la douille filetée s'arrête en raison du plus fort couple provenant de l'équipage coaxial mobile représenté par la pièce intermédiaire, les vérins et la pièce de fermeture de la butée à billes qui termine sa course angulaire en butée contre les retours des patins ou contre toute autre pièce de butée équivalente.

La rotation de la vis entraîne l'ensemble en translation axiale.

La rotation initiale de la vis entraîne la douille filetée jusqu'à l'accouplement mécanique. La rotation se poursuivant au-delà de l'accouplement entraîne l'ensemble en translation le long de la vis en raison de la réaction apportée par le couple plus important présenté par l'embase et l'équipage mobile formé par la butée mobile et les vérins.

La commande des vérins, c'est-à-dire les mises en pression dans les vérins ou la commande électrique sur les dispositifs électromécaniques ou la manoeuvre du dispositif mécanique de commande manuelle provoque le déplacement de retrait de l'embase en position basse et donc le désengagement.

L'écrou de translation débrayable selon invention se dissocie rapidement et l'ensemble s'arrête dans la position verticale où il se trouve, remplissant la fonction de verrou jusqu'à la prochaine activation de la commande.

Il en est ainsi pour les différents écrous de translation selon l'invention disposés sur tous les poteaux ou sur deux d'entre eux, supportant tout plan porteur.

On précise ici que l'écrou de translation selon l'invention peut être utilisé par paire sur des poteaux homologues pour réaliser l'inclinaison des plans porteurs.

L'important avantage de l'invention concerne la possibilité de commander, simultanément ou séparément, en levage, de façon totalement indépendante, un deuxième plan porteur à l'aide d'un deuxième écrou de translation monté sur la même vis dans chacun des poteaux. Il suffit d'actionner sélectivement l'un ou l'autre groupe d'écrous propre à chaque plan porteur pour lever ou descendre individuellement l'un ou l'autre plan porteur.

Divers moyens, dérivés ou équivalents, remplissant les mêmes fonctions ainsi que toutes les variantes sans apport inventif, adjonction d'éléments inopérants et autres modifications simples entrent dans le cadre de la présente invention.

## Revendications

1. Ecrou de translation pour ensemble de levage, notamment d'un plateau porteur utilisant le déplacement rectiligne provenant de la rotation d'une vis ou tige filetée dans un écrou immobilisé en rotation, comprenant

   . un bloc coulissant (1) relié ou articulé à un ensemble mobile déplaçable entre deux positions extrêmes,

   . une douille filetée (19) prisonnière dans le bloc coulissant,

   . un appui mécanique de translation libre en rotation à l'extrémité supérieure de la douille filetée (19), par l'intermédiaire duquel le bloc coulissant (1) porte sur l'extrémité supérieure de la douille filetée (19),

   . une liaison d'accouplement et de désaccouplement mécanique entre la douille filetée et une pièce intermédiaire coaxiale (20), ladite liaison d'accouplement et de désaccouplement étant constituée par des structures à imbrication, conformées dans la douille filetée (19) et dans la pièce intermédiaire (20),

   . ladite pièce intermédiaire (20) ayant une fonction d'accouplement et de désaccouplement le long de la douille (19), vers et au-delà de l'appui mécanique, pour bloquer ou libérer la rotation de la douille filetée (19) en vue soit de permettre le déplacement du bloc coulissant (1) le long de la vis, soit de rendre la rotation de la vis inopérante en translation par la libre rotation sur elle-même de la douille filetée (19) entraînée par la vis, caractérisé en ce que :

. l'ensemble mobile est un plateau porteur (8),

. les structures à imbrication sont des dents (33, 34) conférant à la liaison la fonction de bloquer ou de libérer la rotation de la douille filetée (19) dans un sens ou dans un autre,

. la liaison d'accouplement et de désaccouplement entre la douille filetée (19) et la pièce intermédiaire coaxiale (20) est actionnée par un moyen unique extérieur commandé sélectivement.

2. Ecrou selon la revendication 1 caractérisé en ce que la pièce intermédiaire coaxiale (20) est un manchon enfilé sur la douille filetée.

3. Ecrou selon les revendications précédentes caractérisé en ce que la denture de la liaison d'accouplement et de désaccouplement est formée sur la partie inférieure d'une saillie périphérique en couronne de la douille filetée (19) et en regard d'une denture homologue formée dans la partie supérieure de la pièce intermédiaire (20).

4. Ecrou selon les revendications précédentes caractérisé en ce que les moyens d'accouplement et de désaccouplement sont des vérins à ressort (34) et (35) montés entre la cage de la butée à billes (22) et l'embase de la pièce intermédiaire.

5. Ecrou selon les revendications précédentes caractérisé en ce que les moyens d'accouplement et de désaccouplement sont mécaniques, constitués de deux couples de ressorts (50 à 53) sur des tiges coulissantes (54) et (55) montés de part et d'autre en compression contre une fourche (58) faisant office d'embase-support de la pièce intermédiaire (20), lesdits ressorts étant actionnés par un dispositif mécanique à cames jumelées (63) et (64) manoeuvrées par une barre (56) en appui sur la sous-face du bloc coulissant (1).

6. Ecrou selon les revendications précédentes caractérisé en ce que la pièce intermédiaire coaxiale (20) vient en butée en rotation sur une pièce solidaire du corps (1).

7. Ecrou selon la revendication 1 caractérisé en ce que la douille filetée (19) est prolongée vers le bas, au-delà de sa base, par un écrou (45) monté sur la vis, flottant axialement par rapport à la douille.

8. Ecrou selon les revendications précédentes caractérisé en ce que l'extrémité supérieure de la douille filetée (19) soutient mécaniquement le bloc coulissant (1) par un appui mécanique de translation libre en rotation qui est une butée à billes (22).

9. Ecrou selon les revendications de 1 à 8 caractérisé en ce que les moyens d'accouplement ou de désaccouplement sont à retour automatique d'accouplement par une force élastique de rappel.

10. Ecrou selon les revendications de 1 à 8 caractérisé en ce que les moyens d'accouplement et de désaccouplement sont des dispositifs électromécaniques ou électromagnétiques.

11. Ecrou selon la revendication 5 caractérisé en ce qu'il est relié à la base de la douille par une liaison mécanique de rotation laissant une liberté de translation longitudinale.

**Claims**

1. Nut movable in translation for a lifting assembly, in particular for a carrying platform using rectilinear displacement resulting from the rotation of a screw or screw rod in a nut which is immobile in rotation, comprising :

. a sliding block (1) connected or articulated to a mobile assembly, which is displaceable between two end positions;

. a threaded bush (19) captive in the sliding block;

. a mechanical support with unrestricted translation in rotation at the upper end of the threaded bush (19), by means of which the sliding block (1) is supported by the upper end of the threaded bush (19);

. a mechanical engagement and disengagement connection between the threaded bush and an intermediate coaxial part (20), the said engaging and disengaging connection consisting of notched structures formed on the threaded bush (19) and on the intermediate part (20);

. the said intermediate part (20) having the function, above and beyond mechanical support, of engaging and disengaging the shank of the bush (19) to block or release the rotation of the threaded bush (19) either in order to enable the displacement of the sliding block (1) along the screw, or to render the rotation of the screw inoperative in translation by the unrestricted rotation around its axis of the threaded bush (19) entrained by the screw, characterised in that:

. the mobile assembly is a carrying platform (8);

. the notched structures are teeth (33,34), giving the connection the function of blocking or releasing the rotation of the threaded bush (19) in one direction or another;

. the engaging and disengaging connection of the threaded bush (19) and the coaxial intermediate part (20) is operated by a single exterior means, selectively controlled.

2. Nut according to claim 1, characterised in that the coaxial intermediate part (20) is a sleeve which is fitted to the threaded bush.

3. Nut according to the preceding claims, characterised in that the toothing arrangement of the engaging and disengaging connection is formed on the lower part of a peripheral projection in form of a collar on the threaded bush (19) and opposite a complementary toothing arrangement formed in the upper part of the intermediate part (20).

4. Nut according to the preceding claims, characterised in that the engaging and disengaging means are spring jacks (34) and (35) mounted between the casing of the thrust ball bearing (22) and the base of the intermediate part.

5. Nut according to the preceding claims, characterised in that the engaging and disengaging means are mechanical, consisting of two pairs of springs (50 to 53) on sliding rods (54) and (55) mounted on both sides under compression against a fork (58) acting as a base support of the intermediate piece (20), the said springs being actuated by a mechanical device with twin cams (63) and (64) moved by a bar (56) pressing against the under surface of the sliding block (1).

6. Nut according to the preceding claims, characterised in that the coaxial intermediate part (20) comes to abut in rotation on an integral part of the body (1).

7. Nut according to claim 1, characterised in that the threaded bush (19) is extended downwards beyond its base by a nut (45) mounted on the screw, moving axially in relation to the bush.

8. Nut according to the preceding claims, characterised in that the upper end of the threaded bush (19) supports the sliding block (1) in a mechanical manner by means of a mechanical support with unhindered translation in rotation which is a thrust ball bearing (22).

9. Nut according to claims 1 to 8, characterised in that the engaging or disengaging means return automatically to the engaged position by means of an elastic returning force.

10. Nut according to claims 1 to 8, characterised in that the engaging and disengaging means are electromechanical or electromagnetic devices.

11. Nut according to claim 5 characterised in that it is connected to the base of the bush by a rotational mechanical connection, leaving clearance for longitudinal translation.

**Patentansprüche**

1. Schraubenmutter zur Translation für Hebevorrichtungen, insbesondere Tragebenen, die eine geradlinige Bewegung benutzt, verursacht durch die Drehung einer Schraube oder einer Schraubenspindel in einer Schraubenmutter die drehbewegungsunfähig gemacht ist, bestehend aus

. einem verschiebbaren Block (1) der mit einer zwischen zwei Extrempositionen verschiebbaren Einheit verbunden oder gelenkig verbunden ist,

. einer Schraubbuchse (19) die in dem verschiebbaren Block eingeschlossen ist,

. einer mechanischen Translationsstütze, die am oberen Ende der Schraubbuchse (19) frei drehbar ist, über die der besagte verschiebbare Block (1) auf dem oberen Ende der Schraubbuchse (19) getragen wird,

. einer mechanischen Kupplungs- und Entkupplungsverbindung zwischen der Schraubbuchse und einem koaxialen Zwischenstück (20), wobei die besagte Kupplungs- und Entkupplungsverbindung aus ineinandergreifenden Strukturen besteht, die in der Schraubbuchse (19) und in dem Zwischenstück (20) gebildet sind,

. wobei das besagte Zwischenstück (20) eine Kupplungsund Entkupplungsfunktion entlang der Schraubbuchse (19) bis zu und über die mechanische Stütze hinaus aufweist, um die Drehung der Schraubbuchse (19) zu blokieren oder freizugeben, um entweder die Bewegung des verschiebbaren Blocks (1) entlang der Schraube zu gestatten oder die Drehung der Schraube für eine Translation unwirksam zu machen, indem die Schraubbuchse (19), angetrieben durch die Schraube, in freier Drehung um sich selbst läuft,
dadurch gekennzeichnet, daß:

. die verschiebbare Einheit eine Tragebene (8) ist,

. die ineinandergreifenden Strukturen Zähne (33,34) sind, die der Verbindung die Funktion geben, die Drehung der Schraubbuchse in der einen oder der anderen Richtung zu blockieren oder freizugeben,

. die Kupplungs- und Entkupplungsverbindung zwischen der Schraubbuchse (19) und dem koaxialen Zwischenstück (20) durch eine einzige äußere Vorrichtung selektiv gesteuert werden kann.

2. Schraubenmutter nach Anspruch 1, dadurch gekennzeichnet, daß das koaxiale Zwischenstück (20) eine auf die Schraubbuchse aufgesetzte Hülse ist.

3. Schraubenmutter nach einem der vorstehenden Ansprüche, dadurch gekennzeichnet, daß die ineinandergreifenden Strukturen der Kupplungs- und Entkupplungsverbindung am unteren Rand der Schraubbuchse (19) aus kronenförmigen Aussparungen und am oberen Rand des Zwischenstückes (20) aus entsprechenden Ausbuchtungen bestehen.

4. Schraubenmutter nach einem der vorstehenden Ansprüche, dadurch gekennzeichnet, daß die Kupplungs- und Entkupplungsmittel Zylinder mit federbetätigter Rückholkraft (34,35) sind, die zwischen dem Verschlußstück des Axialkugellagers (22) und der Basis des Zwischenstückes angeordnet sind.

5. Schraubenmutter nach einem der vorstehenden Ansprüche, dadurch gekennzeichnet, daß die Kupplungs- und Entkupplungsmittel mechanischer Art sind und aus zwei Paaren von Federn (50 bis 53) auf verschiebbaren Schäften (54) und (55) bestehen, die auf der einen und der anderen Seite unter Druck gegen eine Gabel (58) angeordnet sind, die die Trägerbasis des Zwischenstückes (20) bildet, wobei die besagten Federn durch eine mechanische Einrichtung mit verbundenen Nocken (63) und (64) bedienbar sind, die durch eine Stange (56) betätigbar ist, wobei sie auf die Unterseite des verschiebbaren Blocks (1) einen Druck ausüben.

6. Schraubenmutter nach einem der vorstehenden Ansprüche, dadurch gekennzeichnet, daß das koaxiale Zwischenstück (20) auf einen am Körper (1) angebrachten Anschlag trifft.

7. Schraubenmutter nach Anspruch 1, dadurch gekennzeichnet, daß die Schraubbuchse (19) nach unten über ihre Basis hinaus durch eine Schraubenmutter (45) verlängert ist, die auf der Schraube aufgesetzt ist und axial in Bezug auf die Buchse schwebend beweglich ist.

8. Schraubenmutter nach einem der vorstehenden Ansprüche, dadurch gekennzeichnet, daß das obere Ende der Schraubbuchse (19) in mechanischer Weise den verschiebbaren Block (1) durch eine mechanische Translationsstütze trägt, welche in der Drehung frei beweglich ist und aus einem Axialkugellager (22) besteht.

9. Schraubenmutter nach den Ansprüchen 1 bis 8, dadurch gekennzeichnet, daß die Kupplungs- und Entkupplungsmittel in die Ruhestellung automatisch zurückkehren durch eine elastische Rückholkraft.

10. Schraubenmutter nach einem der Ansprüche 1 bis 8, dadurch gekennzeichnet, daß die Kupplungs- und Entkuplungsmittel elektromechanische oder electromagnetische Einrichtungen sind.

11. Schraubenmutter nach Anspruch 5, dadurch gekennzeichnet, daß sie mit der Basis der Buchse durch eine mechanische Drehverbindung verbunden ist, die einen longitudinalen Translationsgrad freiläßt.

FIG.1

FIG.2

FIG.3

FIG.4

## FIG.5

FIG. 6

FIG. 7

FIG. 8

FIG.9

FIG.10